# EUROPEAN PATENT APPLICATION

(11) **EP 1 258 604 A1**
(43) Date of publication of application: **20.11.2002**
(21) Application number: 02251497.0
(22) Date of filing: 04.03.2002
(51) Int. Cl.: F01M 9/06, F16N 7/26

(54) **Disk oil slinger assembly**

(30) Priority: 18.05.2001 US 861285
(71) Applicant: DeVilbiss Air Power Company, Jackson, Tennessee 38301-9615 (US)
(72) Inventor: Burkholder, Robert F., Jackson, Tennessee 38305 (US)
(74) Representative: Powell, Timothy John

(57) **Abstract**

A "splash" lubrication system (100) having an oil slinger (108) capable of providing an increased flow rate of lubricating and cooling oil to lubricated components of the system (100) compared to conventional dip stick oil slingers while reducing oil atomization and oil loss through the crankcase vent is disclosed. In embodiments of the invention, the oil slinger (108) is comprised of a disk (112) coupled to the crankshaft assembly (110) of the device (106) being lubricated (e.g., an engine, pump, compressor, or the like) so that rotation of the crankshaft assembly (110) rotates the disk (112) for splashing lubricating oil from the crankcase's oil sump (102) onto the moving parts of the device (106) being lubricated by the lubricating system (100).

## Description

### TECHNICAL FIELD OF THE INVENTION

The present invention generally relates to the field of oil lubrication devices for engines, compressors, pumps and the like, and more particularly to a disk oil slinger suitable for use in oil lubricated engines, compressors, pumps, and the like.

### BACKGROUND ART

Typically, lower cost oil lubricated engines, compressors, pumps and the like have employed a "splash" lubrication system to distribute oil from the oil sump to the mechanical bearings, seals, valves, pistons and other parts that require lubrication and oil cooling. A small protruding piece of material or "dip stick" is attached to one or more of the moving components such that during each revolution of the crankshaft, the dip stick dips into the oil sump at sufficient velocity to cause oil to splash onto the components requiring lubrication. The size, shape and velocity of the dip stick must be engineered to assure sufficient lubrication and oil cooling for all components while minimizing atomization of the oil in the crankcase so as to reduce oil loss through the crankcase vent. A higher velocity or larger profile dip stick will improve lubrication and oil cooling but will increase oil atomization and oil loss through the crankcase vent, A less aggressive dipstick velocity or profile will reduce lubrication and oil cooling but also reduce oil loss through the vent. These conflicting phenomena require designers to compromise their design by reducing the positive benefits of lubrication and oil cooling in order to reduce the negative effects of oil loss.

Another problem with such traditional splash oil lubrication systems is that the engines, compressors, pumps, and the like in which such systems are used are employed in portable devices (e.g., compressors, generators, pressure washers, etc.) that are regularly moved by hand from one work site to another. If such portable devices are not properly leveled prior to operation, the dip stick splash lubricator may not reach the oil sump causing a lack of needed lubrication and cooling, possibly leading to subsequent component failure.

Consequently, it would be advantageous to provide a "splash" lubrication system designed to increase the flow rate of lubricating and cooling oil to lubricated components while reducing oil atomization and oil loss through the crankcase vent. Further, it would be desirable to provide such a lubrication system that is capable of functioning properly while the crankcase is tilted providing an increased tolerance of operation on non-level surfaces.

### DISCLOSURE OF THE INVENTION

Accordingly, the present invention is directed to a "splash" lubrication system having an oil slinger capable of providing an increased flow rate of lubricating and cooling oil to lubricated components of the system compared to conventional dip stick oil slingers while reducing oil atomization and oil loss through the crankcase vent. In embodiments of the invention, the oil slinger is comprised of a disk coupled to the crankshaft assembly of the device being lubricated (e.g., an engine, pump, compressor, or the like) so that rotation of the crankshaft assembly rotates the disk for splashing lubricating oil from the crankcase's oil sump onto components of the device being lubricated. Preferably, at least a portion of the oil slinger is continuously submerged in the lubricating oil contained in the oil sump as it is rotated by the crankshaft assembly, thereby decreasing atomization of oil from the oil sump. Further, the oil slinger may be designed to remain at least partially submerged in the oil sump even if the crankcase is tilted providing increased tolerance of operation on non-level surfaces.

It is to be understood that both the forgoing general description and the following detailed description are exemplary and explanatory only and are not restrictive of the invention as claimed. The accompanying drawings, which are incorporated in and constitute a part of the specification, illustrate an embodiment of the invention and together with the general description, serve to explain the principles of the invention.

### BRIEF DESCRIPTION OF THE DRAWINGS

The numerous advantages of the present invention may be better understood by those skilled in the art by reference to the accompanying figures in which:
FIG. 1 is an isometric view illustrating a lubrication system in accordance with an exemplary embodiment of the present invention;
FIG. 2 is a side elevational view illustrating the oil slinger of the lubrication system shown in FIG. 1;
FIGS. 3 and 4 are side elevational views illustrating tilting of the crankcase;
FIG. 5 is an isometric view illustrating a shaped disk oil slinger having edge and/or surface features in accordance with an exemplary embodiment of the present invention;
FIG. 6 is an isometric view illustrating an auger oil slinger in accordance with an exemplary embodiment of the present invention; and
FIG. 7 is an isometric view illustrating an oil slinger in accordance with an exemplary embodiment of the present invention wherein the oil slinger is not a continuous disk.

### DETAILED DESCRIPTION OF THE INVENTION

Reference will now be made in detail to the presently preferred embodiments of the invention, examples of which are illustrated in the accompanying drawings.

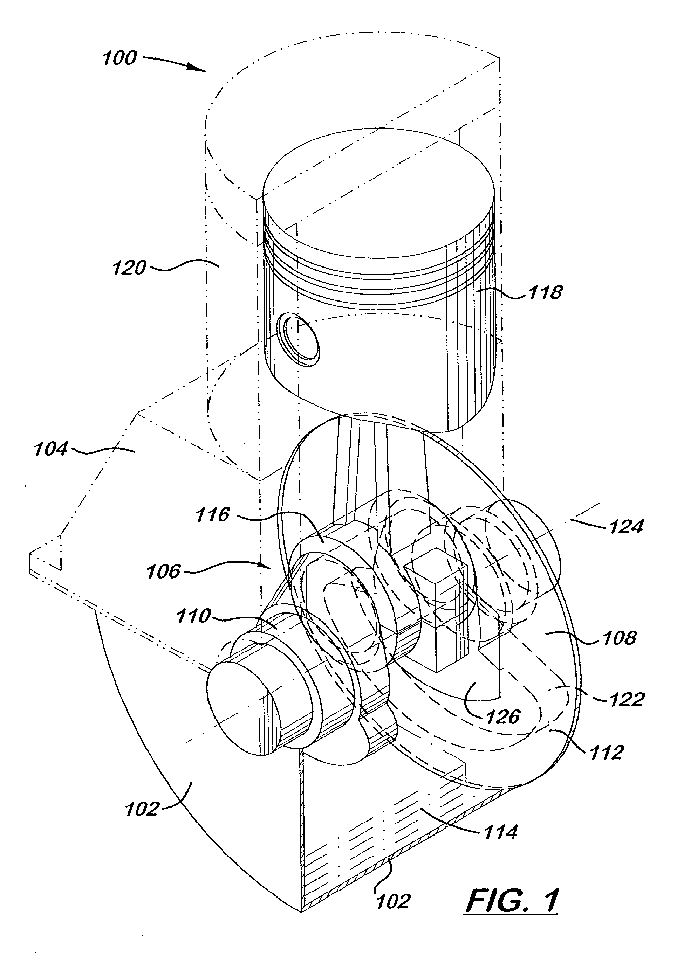

Referring now to FIGS. 1, 2, 3 and 4, an exemplary "splash" lubrication system suitable for providing lubrication to the moving components of devices such as engines, compressors, pumps, and the like in accordance with the present invention is described. The lubrication system 100 includes an oil sump 102 formed in the crankcase 104 of the device 106 in which the lubrication system 100 is employed and an oil slinger 108 coupled to the device's crankshaft assembly 110.

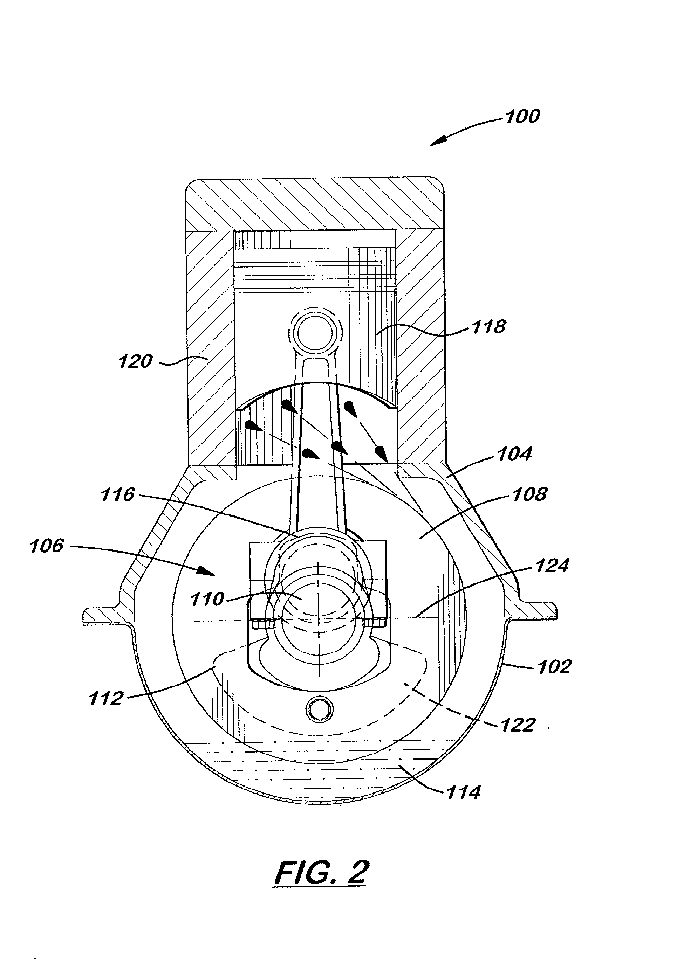

In one preferred embodiment, the oil slinger 108 is comprised of a continuous disk 112 attached to the crankshaft assembly 110. Rotation of the crankshaft assembly 110 rotates the disk for splashing lubricating oil 114 from the oil sump 102 onto components of the device 108 being lubricated (e.g., crankshaft assembly 110, journal 116, piston 118, cylinder wall 120, and the like). Preferably, the disk 112 is positioned along the crankshaft immediately adjacent to journal 116 so that oil may be slung from the oil sump 102 onto the piston 118 and cylinder wall 120. For instance, in one embodiment, shown in FIGS. 1 and 2, the disk 112 is bolted to a counterweight 122 of the crankshaft assembly 108 so that it is centered coaxially with the center of rotation 124 of the crankshaft assembly 110. The disk 112 may have an aperture 126 sized and shaped to fit over the crankshaft assembly 110 so that the disk 112 and crankshaft assembly 110 may be assembled together. However, it will be appreciated that other fabrication methods may be employed without departing from the scope and spirit of the present invention. For example, the disk 112 may be formed as an integral part of the crankshaft assembly 110, or the crankshaft assembly 110 may be formed in two or more sections which are joined together around the disk 112, thereby clamping the disk 112 in place.

During operation of the device 106, rotation of the crankshaft assembly 110 rotates the oil slinger 108 for splashing lubricating oil 114 from the oil sump 102 onto components of the device 106 being lubricated (e.g., crankshaft assembly 110, journal 116, piston 118, cylinder wall 120, and the like). As shown, the disk 112 of oil slinger 108 is generally centered coaxially with the center of rotation 124 of the crankshaft assembly 110 so that rotation of the crankshaft assembly 110 causes the disk 112 to rotate 360 degrees about the center of rotation of the crankshaft 124. Thus, during operation, the lower portion of disk 112 is continuously submerged in lubricating oil 114 contained in the oil sump 102. Because the disk 112 remains in the oil 114 instead of cyclically entering and exiting the oil 114, as does a conventional dip stick or dipper oil slinger, the volume of oil 114 in the oil sump 102 that the disk 112 displaces does not change during each revolution of the crankshaft 110. Further, the oil slinger 108, being a continuous disk 112, does not have a high speed advancing edge that must pass through the lubricating oil 114 as do dipper slingers. Thus, the flow of lubricating oil 114 over the surface of the oil slinger 108 as it advances through the oil sump 102 is substantially more laminar than is possible with intermittent dipper slingers. As a result, the disk oil slinger 108 of the present invention is capable of moving lubricating oil 114 about the crankcase 104 with substantially less atomization of the oil 114.

The amount of oil flow generated by an oil slinger is proportional to the surface area of the submerged portion of the slinger, and proportional to the amount of time that the slinger is submerged during each revolution of the crankshaft. Because the lower portion of disk oil slinger 108 is continuously submerged in the lubricating oil 114 contained in the oil sump 102, and the submerged surface area of the disk 112 is substantially larger than that of the dipper of a dipper oil slinger, the oil flow rate of disk oil slinger 108 of the present invention is significantly greater than that of an intermittent dipper slinger. For example, lubrication systems 100 in accordance with the present invention have been found to be capable of providing oil flows that are 50 to 100 times greater than lubrication systems utilizing dipper slingers, while at the same time reducing atomization of the lubricating oil 114 from the oil sump 102.

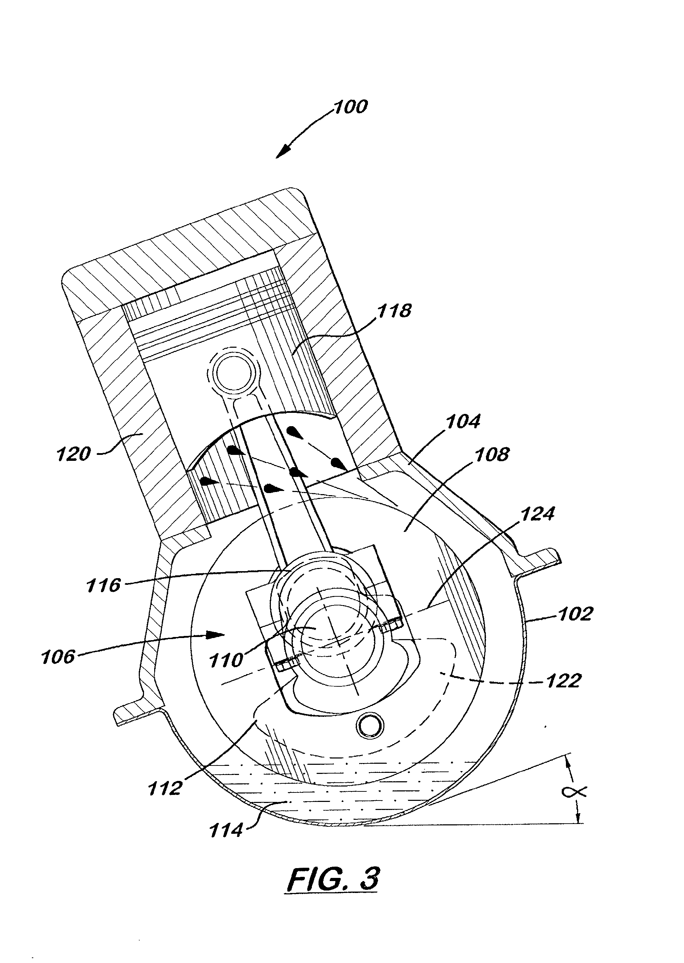

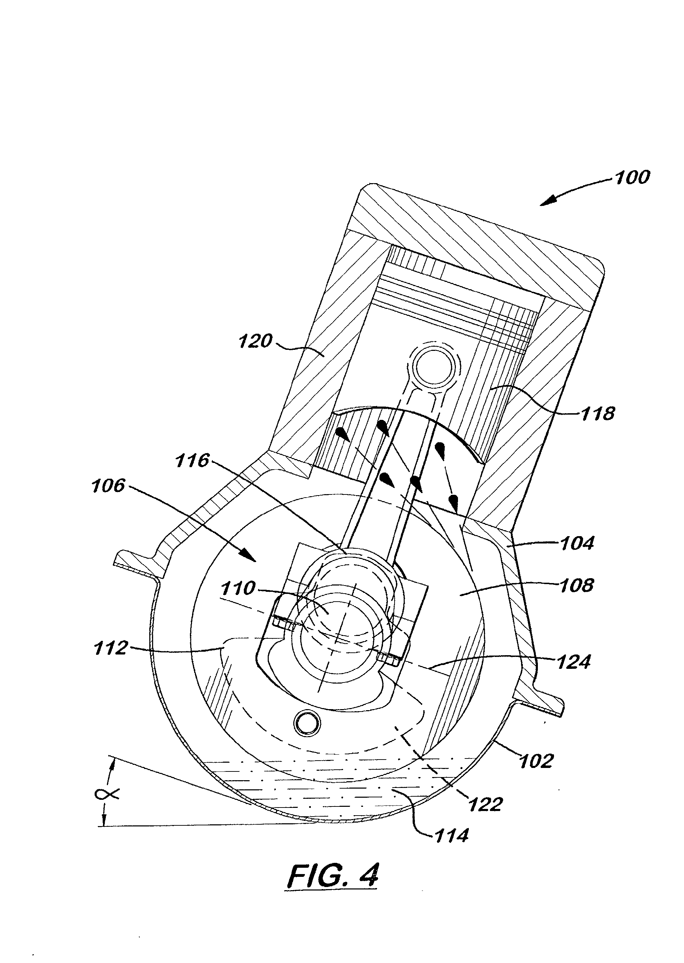

Turning now to FIGS. 3 and 4, the device 106 shown in FIGS. 1 and 2 is illustrated as being tilted at an angle to the horizontal, for example, as if it were set on a non-level surface. As shown, when the crankcase 104 is tilted, the surface of the lubricating oil 114 in oil sump 102 remains substantially horizontal. As shown, the disk 112 of oil slinger 108 is generally centered coaxially with the center of rotation 124 of the crankshaft assembly 110 so that rotation of the crankshaft assembly 110 causes the disk 112 to rotate 360 degrees about the center of rotation of the crankshaft 124. As a result, the disk 112 remains at least partially submerged in the oil sump 102 if the crankcase 104 is tilted providing an increased tolerance to unit operation on non-level surfaces. It will be appreciated that the degree of tilt (α) tolerated by lubrication system 100 may vary depending on the design of crankcase 104, and is limited only by the possibility of lubricating oil 114 from the oil sump 102 entering cylinder 118. However, it is contemplated that degrees of tilt (α) of up to or even greater than 90 degrees (i.e., the crankcase 102 is tilted on its side) are possible.

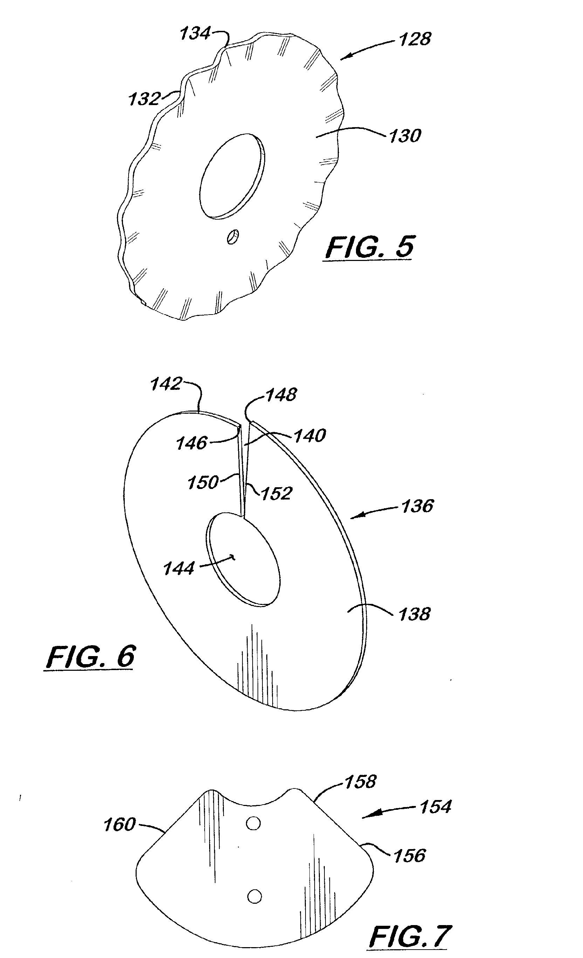

Referring now to FIG. 5, a shaped oil slinger for a lubrication system in accordance with an exemplary embodiment of the invention is described. Shaped oil slinger 128 is comprised of a disk 130 including an edge portion 132 shaped for generating additional oil flow and/or for directing the oil flow at angles to the side of the disk 130, thereby distributing the oil more uniformly within the crankcase than conventional dipper type lubrication systems. Further, the edge portion 132 may be shaped so that it is capable of providing such advantages without unnecessarily interrupting the laminar flow of the lubricating oil around the disk 130, thus preventing unnecessary atomization of lubricating oil from the oil sump (see FIG. 1). For instance, in the embodiment shown in FIG. 4, edge portion 132 may be formed so as to have a contour that is generally sinusoidal or curvilinear in shape as viewed along an edge of the disk 130. Alternately, edge portion 132 may be shaped to have other contours such as fins, slots, grooves, or the like, depending on the requirements of the particular application in which the lubrication system is employed.

In addition to (or in place of) shaped edge portion 132, features 134 may be formed on the surfaces of either or both sides of disk 130 for providing additional oil flow and/or for directing the oil flow at lateral angles to the disk 130. It will be appreciated that the shape of such surface features 134 may vary depending on the requirements (desired oil flow rate, splash pattern, etc.) of the particular device in which the lubrication system is employed. However, exemplary surface features 134 include circumferential or spiraled ridges or grooves (shown), spaced bumps, indentations, or slots, vanes, and the like. Additionally, surface features 134 may be shaped so they do not create unnecessary turbulence thereby interrupting the substantially laminar flow of lubricating oil around the disk 130 and increasing atomization of lubricating oil from the oil sump (see FIG. 1).

Referring now to FIG. 6, an auger oil slinger in accordance with an exemplary embodiment of the present invention is shown. Oil slinger 136 is comprised of a disk 138 having a slit 140 radially formed therein from edge portion 142 toward the disk center 144. The ends 146 & 148 of edge portion 142 adjacent to the slit 140 are separated laterally so that edge portion 142 assumes a generally spiral shape. In this manner, disk 138 is formed into a simple auger capable of generating substantially greater oil flow than the dip stick slingers of conventional dipper lubrication systems. The spiral shape of edge portion 142 may further direct the oil flow at angles to disk 138 thereby distributing the oil more uniformly within the crank case and providing greater coverage of components of the device (see FIG. 1). Because disk 138 remains substantially continuous except for leading and trailing edges 150 & 152 caused by slit 140, oil flow over the surface of the disk 138 is generally laminar. Thus, atomization of lubricating oil may be held to rates that are substantially equal to or less than that of conventional dipper lubrication systems.

Based on the discussion of the disk oil slingers shown in FIGS. 1 through 6, it should now be appreciated that a substantial advantage is obtained by increasing the surface area of the oil slinger so that area of laminar flow is enlarged. In this manner, cohesion of oil to the surface of the oil slinger is improved so that the volume of oil "splashed" by the oil slinger as it rotates is increased while atomization of the oil remains substantially unchanged or is reduced. Thus, it should also be appreciated that in accordance with the present invention, lubrication systems may be provided that, while not utilizing continuous disk oil slingers, provide enhanced performance compared to conventional "dip stick" or dipper systems by substantially increasing the surface area of the oil slinger to provide for more laminar flow of the lubricating oil over the slinger as it is rotated.

Referring now to Fig. 7, an oil slinger in accordance with such an alternate embodiment of the present invention is described. Oil slinger 154 is comprised of a sector 156 of the full disk 112 of oil slinger 108 shown in FIGS. 1 through 4, having curvilinear leading and trailing edges 158 & 160. Preferably, the angle (β) defining sector 156 is selected to provide sufficient surface area so that the flow of lubricating oil over the oil slinger 154 as it is rotated is substantially laminar except for turbulence at leading and trailing edges 158 & 160. In this manner, the volume of oil splashed by the oil slinger 154 is substantially increased compared to conventional dipper oil slingers, while the amount of atomization of lubricating oil remains substantially equal to or less than such oil slingers.

In exemplary embodiments of the invention, the oil slinger 154 may be mounted to crankshaft assembly 110, shown in FIG. 1, so that the disk 112 from which sector 156 is taken would be generally centered coaxially with the center of rotation 124 of the crankshaft assembly 110 if it were complete. In this manner, rotation of the crankshaft assembly 110 causes the oil slinger 154 to rotate 360 degrees about the center of rotation of the crankshaft 124. As a result, the oil slinger 154 remains capable of being at least partially submerged in the oil sump 102 as it is rotated even if the crankcase 104 is tilted. In this manner, the oil slinger 154 is capable of providing an increased tolerance to unit operation on non-level surfaces or in non-level orientations.

It is contemplated that, employing the principles of the invention discussed and illustrated herein, those of skill in the art may now design lubrication systems utilizing oil slingers having a wide variety of shapes (e.g., oval, eccentric, octagonal, etc.) and/or edge and surface features other than those specifically disclosed. Accordingly, such lubrication systems are considered to be well within the scope and spirit of the present invention as presently claimed. Further, it is believed that the lubrication system of the present invention and many of its attendant advantages will be understood by the forgoing description, and it will be apparent that various changes may be made in the form, construction and arrangement of the components thereof without departing from the scope and spirit of the invention or without sacrificing all of its material advantages, the form herein before described being merely an explanatory embodiment thereof. It is the intention of the following claims to encompass and include such changes.

## Claims

1. A lubrication system (100) for a device (106) having a crankcase (104) housing a crankshaft assembly (110) capable of rotation, **characterized by**:
an oil sump (102) suitable for containing lubricating oil (114) for lubricating moving components within the crankcase (104); and
an oil slinger (108) coupled to the crankshaft assembly (110) so that rotation of the crankshaft assembly (110) rotates the oil slinger (108) for splashing lubricating oil (114) from the oil sump (102),
wherein at least a portion of the oil slinger (108) is continuously submerged in the lubricating oil (114) contained in the oil sump (102) as it is rotated by the crankshaft assembly (110).

2. The lubrication system (100) as claimed in claim 1, wherein the oil slinger (108) is generally disk shaped.

3. The lubrication system (100) as claimed in claims 1 or 2, wherein the oil slinger (108) includes a shaped edge portion (132) suitable for at least one of increasing the amount of lubricating oil (114) splashed from the oil sump (102) and directing lubricating oil (114) splashed from the oil sump (102) at an angle to the oil slinger (108).

4. The lubrication system (100) as claimed in claims 1, 2 or 3, wherein the oil slinger (108) includes a surface feature (134) suitable for at least one of increasing the amount of lubricating oil (114) splashed from the oil sump (102) and directing lubricating oil (114) splashed from the oil sump (102) at an angle to the oil slinger (108).

5. The lubrication system (100) as claimed in claims 1, 2, 3 or 4, wherein the oil slinger (108) is coaxial with the crankshaft assembly (110).

6. The lubrication system (100) as claimed in claim 1, wherein the oil slinger (108) comprises an auger (136).

7. The lubrication system (100) as claimed in any of claims 1 through 6,
wherein the oil slinger (108) is capable of extending into lubricating oil (114) contained in the oil sump (102) when the crankcase (104) is tilted.

8. The lubrication system (100) as claimed in claim 1, wherein the oil slinger (154) comprises a sector (156) of a disk (158).

9. The lubrication system (100) as claimed in claim 8, wherein the sector (156) rotates 360 degrees about the center of rotation (124) of the crankshaft assembly (110) so that the oil slinger (154) is capable of extending into lubricating oil (114) contained in the oil sump (102) when the crankcase (110) is tilted.

10. A lubrication system (100), **characterized by**:
an oil sump (102) suitable for containing lubricating oil (114) for lubricating moving components within a crankcase (104) housing a crankshaft assembly (110) so the crankshaft assembly (110) is capable of rotation; and
a disk (112) coaxially coupled to the crankshaft assembly (110) so that rotation of the crankshaft assembly (110) rotates the disk (112) for splashing lubricating oil (114) from the oil sump (102),
wherein at least a portion of the disk (112) is continuously submerged in the lubricating oil (114) contained in the oil sump (102) as it is rotated by the crankshaft assembly (110).

11. The lubrication system (100) as claimed in claim 10, wherein the disk (112) includes a shaped edge portion (132) suitable for at least one of increasing the amount of lubricating oil (114) splashed from the oil sump (102) and directing lubricating oil (114) splashed from the oil sump (102) at an angle to the disk (112).

12. The lubrication system (100) as claimed in claims 10 or 11, wherein the disk (112) includes a surface feature (134) suitable for at least one of increasing the amount of lubricating oil (114) splashed from the oil sump (102) and directing lubricating oil (114) splashed from the oil sump (102) at an angle to the disk (112).

13. The lubrication system (100) as claimed in claims 10, 11, or 12, wherein the disk (112) is capable of extending into lubricating oil (114) contained in the oil sump (102) when the crankcase (104) is tilted.

14. The lubrication system (100) as claimed in claim 10, wherein the disk (112) is formed into an auger (136).

15. An oil slinger (108) for a lubrication system (100), **characterized by**:
a disk (112) suitable for being coupled to a crankshaft assembly (110) so that rotation of the crankshaft assembly (110) rotates the disk (112) for splashing lubricating oil (114) from an oil sump (102) suitable for containing lubricating oil (114),
wherein at least a portion of the disk (112) is continuously submerged in the lubricating oil (114) contained in the oil sump (102) as it is rotated by the crankshaft assembly (110).

16. The oil slinger (108) as claimed in claim 15, wherein the disk (112) includes a shaped edge portion (132) suitable for at least one of increasing the amount of oil splashed from the oil sump and directing oil splashed from the oil sump at an angle to the disk.

17. The oil slinger (108) as claimed in claims 15 or 16, wherein the disk (112) includes a surface feature (134) suitable for at least one of increasing the amount of lubricating oil (114) splashed from the oil sump (102) and directing lubricating oil (114) splashed from the oil sump (102) at an angle to the disk (112).

18. The oil slinger (108) as claimed in claim 15, wherein the disk (112) is formed into an auger (136).

19. A device (106), **characterized by**:
a crankcase (104) housing a crankshaft assembly (110) capable of rotation;
an oil sump (102) suitable for containing lubricating oil (114) for lubricating moving components within the crankcase (104); and
an oil slinger (108) coupled to the crankshaft assembly (110) so that rotation of the crankshaft assembly (110) rotates the oil slinger (108) for splashing lubricating oil (114) from the oil sump (102),
wherein at least a portion of the oil slinger (108) is continuously submerged in the lubricating oil (114) contained in the oil sump (102) as it is rotated by the crankshaft assembly (110).

20. The device (106) as claimed in claim 19, wherein the oil slinger (108) is generally disk shaped.

21. The device (106) as claimed in claims 19 or 20, wherein the oil slinger (108) includes a shaped edge portion (132) suitable for at least one of increasing the amount of lubricating oil (114) splashed from the oil sump 102) and directing lubricating oil (114) splashed from the oil sump (102) at an angle to the oil slinger (108).

22. The device (106) as claimed in claims 19, 20 or 21, wherein the oil slinger (108) includes a surface feature (134) suitable for at least one of increasing the amount of lubricating oil (114) splashed from the oil sump (102) and directing lubricating oil (114) splashed from the oil sump (102) at an angle to the oil slinger (108).

23. The device (106) as claimed in any of claims 19 through 22, wherein the oil slinger (108) is coaxial with the crankshaft assembly (110).

24. The device (106) as claimed in claim 19, wherein the oil slinger (108) comprises an auger (136).

25. The device (106) as claimed in any of claims 19 through 24, wherein the oil slinger (108) is capable of extending into lubricating oil (114) contained in the oil sump (102) when the device (106) is tilted at an angle to horizontal.

26. The device (106) as claimed in claim 19, wherein the oil slinger (108) comprises a sector (156) of a disk (158).

27. The device (106) as claimed in claim 26, wherein the sector (156) rotates 360 degrees about the center of rotation (124) of the crankshaft assembly (110) so that the oil slinger (108) is capable of extending into lubricating oil (114) contained in the oil sump (102) when the crankcase (104) is tilted.

28. A lubrication system (100), **characterized by**:
an oil slinger (100) suitable for being coupled to a crankshaft assembly (110) so that rotation of the crankshaft assembly (110) rotates the oil slinger (108) for splashing lubricating oil (114) from an oil sump (102) suitable for containing lubricating oil (114),
wherein flow of the lubricating oil (114) over the oil slinger (108) as it passes through the oil sump (102) is substantially laminar for inhibiting atomization of the lubricating oil (114).

29. The lubrication system (100) as claimed in claim 28, wherein the oil slinger (108) comprises a disk (112), and wherein at least a portion of the disk (112) is continuously submerged in the lubricating oil (114) contained in the oil sump (102) as it is rotated by the crankshaft assembly (110).

30. The lubrication system (100) as claimed in claim 28 or 29, wherein the oil slinger (108) includes a shaped edge portion (132) suitable for at least one of increasing the amount of lubricating oil (114) splashed from the oil sump (102) and directing lubricating oil (114) splashed from the oil sump (102) at an angle to the oil slinger (108).

31. The lubrication system (100) as claimed in claim 28, 29 or 30, wherein the oil slinger (108) includes a surface feature (134) suitable for at least one of increasing the amount of lubricating oil (114) splashed from the oil sump (102) and directing lubricating oil (114) splashed from the oil sump (102) at an angle to the oil slinger (108).

32. The lubrication system (100) as claimed in claim 28, wherein the oil slinger (108) comprises an auger (136).

33. The lubrication system (100) as claimed in claim 28, wherein the oil slinger (154) comprises a sector (156) of a disk (158).

34. The lubrication system (100) as claimed in claim 33, wherein the sector (156) rotates 360 degrees about the center of rotation (124) of the crankshaft assembly (110) so that the oil slinger (154) is capable of extending into lubricating oil (114) contained in the oil sump (102) when the crankcase (104) is tilted.
